# FASCICULE DE BREVET EUROPEEN

(11) **EP 3 519 639 B1**
(45) Date de publication et mention de la délivrance du brevet: **24.01.2024**
(21) Numéro de dépôt: 17786977.3
(22) Date de dépôt: 03.10.2017
(51) Int. Cl.: E04B 1/10, E04C 2/12, B32B 3/10, B27M 3/00, B32B 7/08, B32B 21/13, B32B 21/14, E04C 2/40, E04C 2/42, E04H 9/02, E04B 1/26

(54) **SYSTÈME CONSTRUCTIF À LAMES STRUCTURELLES CROISÉES**
BAUSYSTEM MIT GEKREUZTEN STRUKTURPLATTEN
CONSTRUCTION SYSTEM WITH CROSSED STRUCTURAL BOARDS

(30) Priorité: 03.10.2016 FR 1659517
(43) Date de publication de la demande: 07.08.2019
(73) Titulaire: Leko France, 88150 Chavelot (FR)
(72) Inventeur: BOUCHÔOU, Jeanne, 83130 La Garde (FR); CORDIER, François-Xavier, 57000 Metz (FR); DEFER, Gael, 88270 Bocquegney (FR); MUNSCH, Romain, 88390 Les Forges (FR)
(74) Mandataire: Lautier, Thierry
(86) Numéro de dépôt international: PCT/FR2017/052723
(87) Numéro de publication internationale: WO 2018/065729

(56) Documents cités:
- EP-A1- 2 821 191
- WO-A1-2013/150188
- DE-U1- 20 216 634
- FR-A3- 2 737 745
- Public Sénat / WiSEED: "LEKO startup de WiSEED sur Public Sénat", , 18 février 2016 (2016-02-18), XP054977857, Extrait de l'Internet: URL:https://www.youtube.com/watch?v=igHQNy yWfEw [extrait le 2017-11-03]

## Description

La présente invention concerne le domaine des systèmes constructifs destinés à la construction d'éléments en bois tels que des habitations ou des petits collectifs.

Différentes techniques sont d'ores et déjà connues pour concevoir et fabriquer des systèmes constructifs à partir d'éléments essentiellement en bois.

Une première technique, dite « MOB » ou « Mur Ossature Bois », consiste en une ossature composée de montants et de traverses en bois assemblés les uns aux autres. Ces éléments d'ossature sont fabriqués à partir d'avivés usinés aux dimensions souhaitées, de façon manuelle et/ou avec des machines à commande numérique. L'assemblage de l'ossature se fait ensuite à l'aide d'organes de type tiges (pointes, vis, boulons, etc.) qui lient les montants aux traverses de façon à former un cadre de structure sur lesquels des panneaux de contreventement (en général « OSB », pour « Panneau de Grandes Particules Orientées », ou « Oriented Strand Board » en langue anglo-saxonne) sont fixés. Ces ensembles sont appelés « panneaux » de murs et reprennent toutes les sollicitations mécaniques de la structure. Cette ossature, par définition porteuse, peut être complétée en atelier ou sur chantier par une isolation thermique soufflée ou posée (panneaux d'isolants) mais également par des films pour l'étanchéité à l'eau et/ou à l'air et/ou d'autres éléments fonctionnels tel qu'un pare-feu ou une isolation phonique.

Cette première technique « MOB » présente essentiellement deux inconvénients. Le premier inconvénient est la difficulté d'automatisation complète de l'assemblage qui demande toujours un opérateur humain, même sur les lignes les plus développées. La fabrication d'un système constructif par « MOB » engendre un coût de fabrication élevé, en raison de la main d'oeuvre nécessaire.

Le deuxième inconvénient de cette technique réside dans l'importante quantité de colle qu'elle requiert. En effet, les panneaux utilisés pour le contreventement tel que l'OSB sont en parties composés de colle. Or, la colle est inappropriée du point de vue environnemental en raison de son impact écologique particulièrement néfaste et il convient donc de l'éviter ou à tout le moins d'en limiter la quantité. De plus, l'assemblage des panneaux de contreventement les uns avec les autres est réalisé uniquement par des organes de types tiges. Dans le cas d'un séisme, ces organes ont donc tendance à se plastifier (c'est-à-dire se déformer) de sorte que la structure ne va résister qu'à un seul et unique séisme.

Une deuxième technique, dite « CLT » ou « Bois Lamellé Croisé » (ou, en langue anglo-saxonne, « Cross Laminated Timber »), consiste à pourvoir chacun des éléments constitutifs d'un ensemble de plis (ou de couches) superposés les uns sur les autres. Ces plis comprennent chacun un ensemble de lames structurelles en bois, disposées les unes à la suite des autres et parallèles entre elles. Ils sont par ailleurs agencés, les uns par rapport aux autres, de sorte que les lames d'un pli soient orthogonales aux lames d'un pli adjacent. Les éléments constitutifs sont fabriqués en préparant successivement les plis, puis en superposant ces plis de manière que l'une des faces des lames d'un pli soit en contact avec l'une des faces des lames d'un pli adjacent, ce qui définit une interface de contact. De la colle est disposée au niveau des interfaces de contact, afin de maintenir les lames - et donc les plis - les uns contre les autres.

Cette deuxième technique « CLT » présente le même inconvénient de l'utilisation massive de colle, avec son impact environnemental, mais il vient s'ajouter des problématiques liées à l'industrialisation et à la résistance mécanique. En premier lieu, la colle nécessite un temps de pressage et un temps de séchage importants, ce qui ralentit d'autant la production. De plus, le but de ces panneaux étant de créer un voile massif, l'insertion de lames fonctionnelles n'est pas réalisable. Les lames fonctionnelles doivent donc être ajoutées ultérieurement, ce qui a pour effet de ralentir la pose sur le chantier. En deuxième lieu, lorsqu'une ouverture doit être ménagée dans l'un des éléments constitutifs (par exemple pour une fenêtre), la technique « CLT » requiert l'usinage post-collage de cet élément entraine une perte de temps et de matière. Ces inconvénients se répercutent sur le prix de vente.

Une troisième technique a été divulguée dans la demande internationale numéro WO 2013/150188. Celle-ci consiste à former chaque élément constitutif d'un ensemble de plis superposés, chaque pli comprenant un ensemble de lames structurelles en bois, parallèles entre elles, mais contrairement à la technique « CLT » les lames structurelles sont écartées les unes des autres. Au niveau de chaque pli, des lames fonctionnelles (par exemple pour une fonction d'isolation thermique et/ou phonique, d'inertie thermique, de résistance au feu ou pour toute autre fonction complémentaire) sont disposés dans les écartements entre les lames structurelles, selon une alternance de lames structurelles et fonctionnelles. Enfin, de façon semblable à la technique « CLT » décrite ci-dessus, les plis sont agencés les uns aux autres de façon « croisée » (c'est-à-dire de façon que les lames d'un pli soient orthogonales aux lames d'un pli adjacent) et sont en outre maintenus les uns contre les autres en disposant de la colle, au niveau des interfaces de contact entre les faces des lames de deux plis adjacents.

Dans cette troisième technique, l'écartement entre les lames structurelles permet d'insérer des lames fonctionnelles au stade de la fabrication en usine, ce qui d'une part évite la pose ultérieure des lames fonctionnelles sur chantier et d'autre part limite la quantité de bois perdu lorsqu'une ouverture doit être ménagée. Toutefois, l'utilisation encore massive de colle induit les inconvénients précités en termes d'environnement et d'industrialisation, mais également des inconvénients en terme de résistance sismique, car les assemblages collés ne présentent aucune plasticité et vont donc rompre brutalement en cas de sollicitations dynamiques trop importantes. Le document WO2013150188 divulgue toutes les caractéristiques du préambule de la revendication 1.

L'objet de la présente invention est de fournir un système constructif requérant le moins de colle possible, tant pour limiter l'impact environnemental que pour permettre une fabrication automatisée des éléments constitutifs et conférer au système constructif une résistance supérieure aux séismes.

A cette fin, la présente invention a pour objet un système constructif, comprenant un ensemble d'éléments constitutifs dont au moins un comprend au moins deux plis superposés comprenant chacun au moins deux lames structurelles en bois, une face d'au moins une lame structurelle de l'un desdits plis étant en contact avec une face d'au moins une lame structurelle d'un pli adjacent au niveau d'une interface de contact. Selon l'invention, au moins deux des éléments constitutifs sont fixés ensemble par l'intermédiaire de moyens de fixation non collants, au moins deux plis adjacents parmi les plis superposés d'un même élément constitutif sont maintenus l'un contre l'autre par l'intermédiaire de moyens de maintien non collants et les faces en contact sont au moins partiellement pourvues, au niveau de l'interface de contact, d'un ensemble de motifs rainurés agencés de façon à faire obstacle au glissement desdites lames structurelles l'une par rapport à l'autre suivant au moins un premier axe de blocage.

Grâce aux motifs rainurés, deux lames structurelles peuvent être maintenues l'une contre l'autre, suivant au moins un premier axe de blocage dans le plan de l'interface de contact, sans nécessiter de disposer de colle sur leur interface de contact. Par suite, les moyens de maintien non collants entre les plis permettent un blocage suivant un axe normal à l'interface de contact, toujours sans nécessiter de la colle. Le recours à des moyens supplémentaires de fixation entre les éléments constitutifs, encore une fois non collants, permet encore de s'abstenir de l'utilisation de colle.

Par conséquent, un système constructif selon l'invention permet d'éviter - ou à tout le moins de limiter - l'utilisation de colle. Il s'ensuit que l'ensemble des problèmes liés à la colle peuvent être surmontés : l'empreinte écologique du système est meilleure, les éléments constitutifs peuvent être fabriqués de façon industrialisée sans aucun délai lié aux temps de pressage et de séchage de la colle, et enfin la résistance du système aux séismes est améliorée grâce à la plastification possible des assemblages par motifs rainurés.

Du point de vue industriel, en plus de l'absence de colle, les motifs rainurés ont pour effet supplémentaire de former des repères permettant de réaliser avec précision l'assemblage des lames structurelles entre elles (c'est-à-dire de manière que les motifs rainurés de lames structurelles adjacentes s'emboîtent). L'assemblage peut dès lors être réalisé efficacement par un robot cartésien sur une ligne de production.

Du point de vue mécanique, la zone de plasticité d'un assemblage par motifs rainurés est plus élevée que celle d'un assemblage par colle. En effet, il s'est avéré qu'en faisant travailler un assemblage par motifs rainurés au-dessus de son seuil élastique, celui-ci a tendance à se plastifier et à se déformer, mais sans pour autant rompre. Ainsi, en cas de séisme, contrairement à un assemblage par colle, un assemblage par motifs rainurés permet d'absorber une importante quantité d'énergie dans le plan de l'interface de contact (qui inclut le ou les axes de blocage) et donc de résister efficacement à tout type de secousse.

Un autre avantage majeur de l'invention est qu'elle rend possible l'utilisation de bois de feuillus pour former les lames structurelles. En effet, on classe généralement le bois en deux catégories : le bois résineux et le bois de feuillus. Le bois résineux étant moins cher que le bois de feuillus, il est préféré pour sa facilité de séchage dans le domaine de la construction depuis plusieurs décennies, malgré des résistances mécaniques plus importantes pour le bois de feuillus. De plus, le marché des bois résineux devenant concurrentiel et la ressource européenne étant principalement composée de feuillus, le développement de solutions constructives telle que la présente invention est nécessaire. Le prix du bois de feuillus est fixé en fonction de l'aspect visuel, par conséquent le marché des bois jugés inesthétiques est délaissé pour celui des bois de chauffage. Cependant, les résistances mécaniques n'étant pas corrélés à leurs aspects visuels, l'invention rend donc parfaitement appropriée la réalisation d'un système constructif en bois de feuillus. De plus, l'usinabilité des rainures étant intimement liée aux résistances mécaniques, celle-ci s'en trouve ainsi facilité avec les essences feuillues.

Les motifs rainurés comprennent une première série de rainures parallèles et une deuxième série de rainures parallèles, orientées respectivement suivant un premier axe et un deuxième axe non parallèles. Lorsque deux plis adjacents sont superposés, ces deux séries de rainures parallèles, réparties au niveau de l'interface de contact entre les faces des lames structurelles qui entrent en contact (l'une sur la lame structurelle d'un pli et l'autre sur la lame structurelle du pli adjacent), peuvent être emboitées l'une dans l'autre et ainsi bloquer le glissement des deux lames suivant le premier axe de blocage. Ces motifs permettent ainsi un blocage suivant au moins un axe du plan de l'interface de contact et peuvent en outre être usinés de façon relativement simple (des rainures parallèles peuvent être facilement réalisées par un usinage traversant la largeur ou la longueur de la lame).

Au niveau d'au moins une interface de contact, la face d'une lame est munie d'une première série de rainures parallèles orientées suivant un premier axe et la face de l'autre lame est munie d'une première série de rainures parallèles orientées suivant un premier axe et d'une deuxième série de rainures parallèles orientées suivant un deuxième axe non parallèle à l'axe des rainures de la première série de façon à faire obstacle au glissement desdites lames structurelles l'une par rapport à l'autre suivant ledit premier axe de blocage. Cette configuration permet d'empêcher le glissement relatif de deux plis adjacents suivant un axe de blocage dans le plan de l'interface de contact, par un simple jeu de rainures et de picots disposés de façon appropriée sur les lames de l'élément constitutif. Cela permet de réaliser un blocage de façon simple, puisqu'il suffit d'usiner les faces des lames suivant leurs longueurs et/ou leurs largeurs pour former les rainures et/ou picots.

En plus du premier axe de blocage, les motifs rainurés sont agencés de manière à faire également obstacle au glissement des lames structurelles l'une par rapport à l'autre suivant au moins un deuxième axe de blocage non parallèle au premier axe de blocage. Ainsi, les lames structurelles peuvent être maintenues ensemble selon au moins deux axes de blocage, non parallèles entre eux, mais tous deux situés dans le plan de l'interface de contact. Autrement dit, les lames structurelles sont maintenues l'une contre l'autre sur tout le plan de l'interface de contact, en plus du maintien suivant l'axe normal à l'interface de contact (par l'intermédiaire des moyens de maintien). Il en résulte un renforcement du maintien des lames structurelles. On comprend que lorsque des motifs rainurés ont été appliqués sur une même face et suivant deux axes non parallèles, il en résulte des motifs sous la forme d'une matrice de picots, dont l'ensemble se comporte de façon performante dans le domaine plastique en cas de forte contrainte mécanique et, par-là, en termes de résistance aux séismes.

Dans un mode de réalisation particulier des motifs rainurés, ceux-ci comprennent une première série de rainures parallèles et une deuxième série de rainures parallèles, orientées respectivement suivant un premier axe orthogonal au premier axe de blocage et un deuxième axe orthogonal au deuxième axe de blocage. On comprend que le blocage de ces deux axes non parallèles, implique le blocage de la rotation (et plus généralement le déplacement dans toutes les directions) dans le plan de l'interface. Dans ce cas, chacune des lames est pourvue des deux séries de rainures. Dès lors, lorsque deux plis adjacents sont superposés, ces séries peuvent être emboitées l'une dans l'autre (c'est-à-dire la première série de la première lame s'emboîte avec la deuxième série de la deuxième lame, pour faire obstacle suivant le premier axe de blocage, et la deuxième série de la première lame s'emboîte avec la première série de la deuxième lame, pour obstacle suivant le deuxième axe de blocage). Ces motifs permettent ainsi un blocage suivant les deux axes de blocage, tous deux situés dans le plan de l'interface de contact, et peuvent en outre être usinés de façon relativement simple (des rainures parallèles peuvent être facilement réalisées par un usinage traversant la largeur ou la longueur de la lame).

Au niveau d'au moins une interface de contact, la face d'une lame est munie d'une première série de rainures parallèles orientées suivant un premier axe et la face de l'autre lame est munie d'une première série de rainures parallèles orientées suivant un premier axe et d'une deuxième série de rainures parallèles orientées suivant un deuxième axe non parallèle à l'axe des rainures de la première série de façon à faire obstacle au glissement desdites lames structurelles l'une par rapport à l'autre suivant ledit premier axe de blocage, et au niveau d'au moins une autre interface de contact, la face d'une lame est munie d'une deuxième série de rainures parallèles orientées suivant un deuxième axe et la face de l'autre lame est munie d'une première série de rainures parallèles orientées suivant un premier axe non parallèle à l'axe des rainures de la deuxième série et d'une deuxième série de rainures parallèles orientées suivant un deuxième axe de façon à faire obstacle au glissement desdites lames structurelles l'une par rapport à l'autre suivant ledit deuxième axe de blocage. Cette configuration permet d'empêcher le glissement relatif de deux plis adjacents (ou de trois plis adjacents, étant entendu que le premier et le deuxième pli peuvent empêcher le glissement suivant le premier axe de blocage et que le deuxième et le troisième plis peuvent empêcher le glissement suivant le deuxième axe de blocage) dans le plan de l'interface de contact, par un simple jeu de rainures et de picots disposés de façon appropriée sur les lames de l'élément constitutif. Cela permet de réaliser un blocage dans le plan des interfaces de contact de façon simple, puisqu'il suffit d'usiner les faces des lames suivant leurs longueurs et/ou leurs largeurs pour former les rainures et/ou picots.

De préférence, au niveau d'au moins une partie de l'interface de contact entre deux lames structurelles, les motifs rainurés s'imbriquent au moins partiellement les uns dans les autres, ce qui permet de faire obstacle au glissement des lames structurelles l'une par rapport à l'autre suivant le ou les axes de blocage.

Les motifs rainurés présentent des sections de forme sensiblement triangulaire. Ces formes complémentaires permettent d'améliorer l'imbrication des motifs rainurés les uns dans les autres. Les motifs rainurés présentent une largeur à la base comprise entre 1 et 15 millimètres et avantageusement un angle au sommet compris entre 40° et 70°. Ce dimensionnement permet de disposer de suffisamment de motifs rainurés sur une lame de dimension standard et de favoriser la plastification des motifs rainurés en cas de forte contrainte sur les lames.

Une lame fonctionnelle est intercalée entre deux lames structurelles d'un même pli. Une lame fonctionnelle est une lame remplissant une fonction telle que l'isolation thermique et/ou phonique, l'inertie thermique ou la résistance au feu. Ainsi, le système constructif peut être fabriqué industriellement dans son intégralité, c'est-à-dire y inclus les lames structurelles et les lames fonctionnelles, ce qui évite la pose des lames fonctionnelles ultérieurement sur chantier et permet donc un gain de temps et une meilleure précision lors de la pose.

Dans ce dernier cas, la face d'au moins une lame structurelle d'un pli adjacent, orientée vers le pli, est de préférence agencée au niveau de l'interface de contact avec le motif rainuré, de façon à ménager un espace entre les lames fonctionnelles de deux plis adjacents. Cet espace libre contribue également à l'isolation entre les deux plis adjacents.

Le nombre de plis superposés de l'élément constitutif est au moins égal à 3. Il peut avantageusement être compris entre 5 et 15.

On comprend que par « moyens de maintien non collants » et par « moyens de fixation non collants », on entend que ces moyens sont essentiellement dépourvus de colle. Au moins certains des moyens de maintien comprennent des organes d'assemblage de type tige. Une telle tige peut par exemple être une vis. Ce type d'organe d'assemblage est particulièrement efficace pour maintenir deux plis adjacents l'un contre l'autre, sans nécessiter de colle.

De même, il peut être avantageusement prévu qu'au moins certains des moyens de fixation comprennent des organes d'assemblage de type tige et/ou de type connecteur, ce qui permet là encore une fixation sans colle.

On comprend également que l'ajout éventuel de résidus de colle, afin de participer aux moyens de maintien et de fixation précités, ne permet pas pour autant de sortir du cadre de la présente invention, dans la mesure où il importe surtout qu'au moins l'un des moyens de maintien et qu'au moins l'un des moyens de fixation ne soit pas composé de colle comme ce peut être le cas dans les techniques antérieures précitées. Alors que l'invention propose de disposer essentiellement de moyens de maintien et de fixation dépourvus de colle, il demeure que le fait d'ajouter une quantité relativement faible de colle au système constructif selon la présente invention permet toujours de résoudre le problème technique de la limitation de la quantité de colle.

Avantageusement, au moins certaines des lames structurelles sont constituées en bois de feuillus. Ce type de bois, appliqué aux motifs rainurés selon l'invention, permet de renforcer le maintien entre deux lames structurelles grâce à la forte densité du bois, tout en disposant d'un bois déclassé et donc potentiellement moins onéreux.

La présente invention a également pour objet un procédé de fabrication d'un système constructif tel que décrit ci-dessus, comprenant notamment les étapes suivantes : (i) l'usinage des faces des lames structurelles destinées à être en contact, de façon à les pourvoir de motifs rainurés au niveau de leur interface de contact, (ii) la mise en contact et le maintien l'une contre l'autre des lames structurelles destinées à être en contact, les unes à la suite des autres, de façon à former les éléments constitutifs et (iii) la fixation des éléments constitutifs les uns avec les autres. De préférence, ce procédé de fabrication peut être mis en oeuvre de façon automatisée.

D'autres caractéristiques et avantages de l'invention apparaîtront à la lecture de la description qui suit de modes de réalisation de l'invention, donnés à titre d'exemple et en référence aux dessins annexés.
La figure 1 est une vue en perspective d'un exemple de système constructif selon la présente invention.
La figure 2 est une vue en perspective de l'un des éléments constitutifs du système constructif de la figure 1.
La figure 3 est une vue en perspective d'une partie de deux éléments constitutifs d'un système constructif selon l'invention.
La figure 4 est une vue éclatée d'une partie des deux éléments constitutifs de la figure 3.
Les figures 5 et 6 sont des vues en perspective de deux lames structurelles mises en contact selon un mode de réalisation sortant de l'étendue des revendications.
Les figures 7 et 8 sont des vues en perspective des deux lames structurelles des figures 5 et 6 auxquelles sont adjoints des moyens de maintien.
La figure 9 est une vue en perspective de deux lames structurelles en contact selon un deuxième mode de réalisation.
Les figures 10 à 14 sont des vues en perspective de cinq exemples de réalisation de motifs rainurés, les exemples des figures 11, 12 et 14 n'étant pas revendiqués et sortant de l'étendue des revendications.
La figure 15 est une vue en perspective illustrant la fixation de deux éléments constitutifs constitués chacun de deux plis superposés.
La figure 16 est une vue en perspective illustrant la fixation de deux éléments constitutifs constitués chacun de quatre plis superposés.
La figure 17 est une vue en perspective illustrant la fixation de deux éléments constitutifs orthogonaux selon un premier mode de réalisation
La figure 18 est une vue en perspective illustrant la fixation de deux éléments constitutifs orthogonaux selon un deuxième mode de réalisation.
La figure 19 est une vue en perspective d'un élément constructif selon un mode de réalisation particulier de l'invention.
La figure 20A et 20B sont deux vues en perspective d'une première variante de réalisation de l'élément constructif de la figure 19.
La figure 21A et 21B sont deux vues en perspective d'une deuxième variante de réalisation de l'élément constructif de la figure 19.
La figure 22A et 22B sont deux vues en perspective d'une troisième variante de réalisation de l'élément constructif de la figure 19.

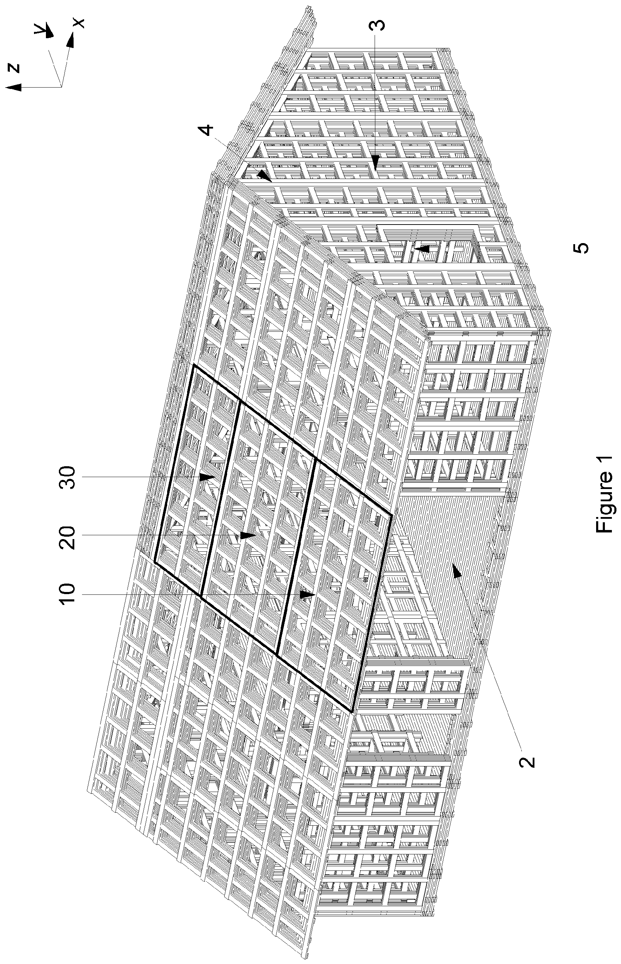

En référence à la figure 1, un système constructif 1 selon la présente invention peut se présenter sous la forme d'une habitation en bois, bien que toutes autres formes d'édifice puissent être envisagées. Cette habitation comporte un plancher 2, des murs 3 et un rampant de toiture 4. Tous ces éléments peuvent être constitués de bois. En outre, des ouvertures peuvent être pratiquées dans différents éléments du système constructif, tels que l'ouverture 5 pratiquée au niveau d'un mur 3 pour l'apposition d'une fenêtre.

Dans cet exemple, le plancher 2, les murs 3 et le rampant de toiture 4 sont chacun formés d'un ensemble d'éléments constitutifs 10, 20, 30... A titre d'exemple, chaque versant du rampant de toiture 4 a été divisée en plusieurs de ces éléments constitutifs. On comprendra que ce découpage tient essentiellement aux limites de dimensionnement des transports standards dans la construction et des outils industriels permettant de fabriquer les éléments constitutifs.

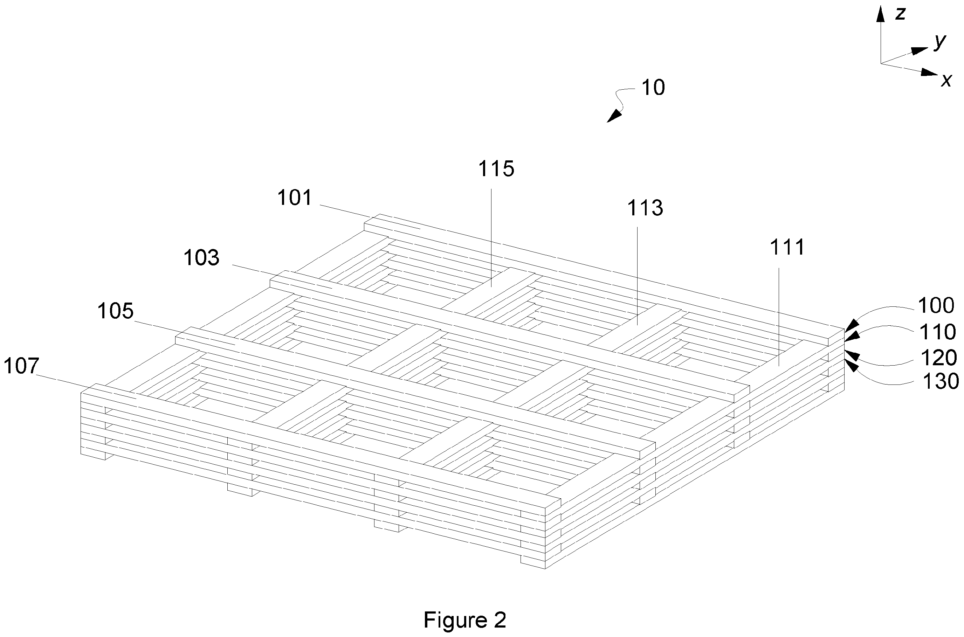

L'un de ces éléments constitutifs, à savoir l'élément constitutif 10, est représenté plus précisément sur la figure 2. Il comprend un ensemble de plis superposés 100, 110, 120... dans une configuration dite « à lames croisées ». Dans cet exemple, il est prévu un nombre de plis égal à dix mais un nombre de plis différent peut être prévu, par exemple un nombre supérieur à trois et de préférence compris entre cinq et quinze, ou encore de préférence un nombre compris entre huit et douze. La détermination du nombre adéquat de plis est un arbitrage entre la performance thermique de l'élément constitutif, la solidité de cet élément (d'autant meilleure qu'il y a de plis) et son épaisseur globale (qui, usuellement, ne doit pas dépasser une certaine limite).

Les plis comprennent eux-mêmes chacun des lames structurelles en bois. Le pli supérieur 100 comprend des lames structurelles 101, 103, 105... parallèles et orientées suivant l'axe (Oy). Le plus 110, adjacent au pli supérieur 100 et qui lui est directement inférieur, comprend lui-même un ensemble de lames structurelles 111, 113, 115... parallèles et orientées suivant l'axe (Ox) perpendiculaire à l'axe (Oy). Les plis 100, 110, 120... sont ainsi alternativement formés de lames structurelles orientées suivant l'axe (Oy) et de lames structurelles orientées suivant l'axe (Ox). Ainsi, les lames structurelles de deux plis adjacents sont orthogonales entre elles et forment un quadrillage.

D'autres configurations de plis et de lames restent toutefois envisageables, dans la mesure où les lames de deux plis adjacents ne sont pas parallèles entre elles mais demeurent inclinées l'une par rapport à l'autre par un angle non nul (dont la valeur dépendra de la configuration de l'élément constitutif).

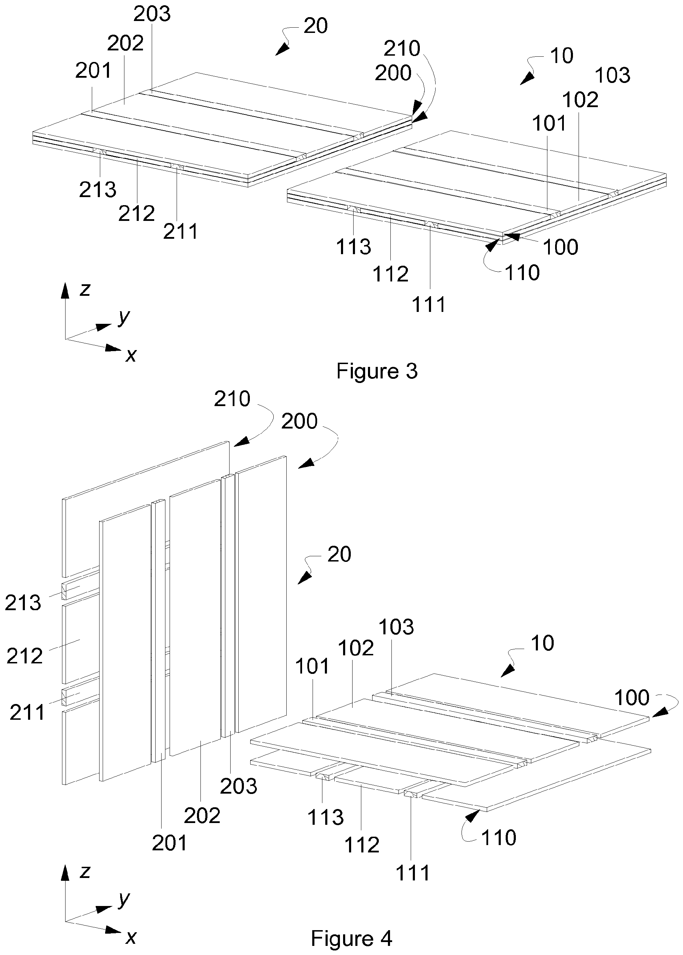

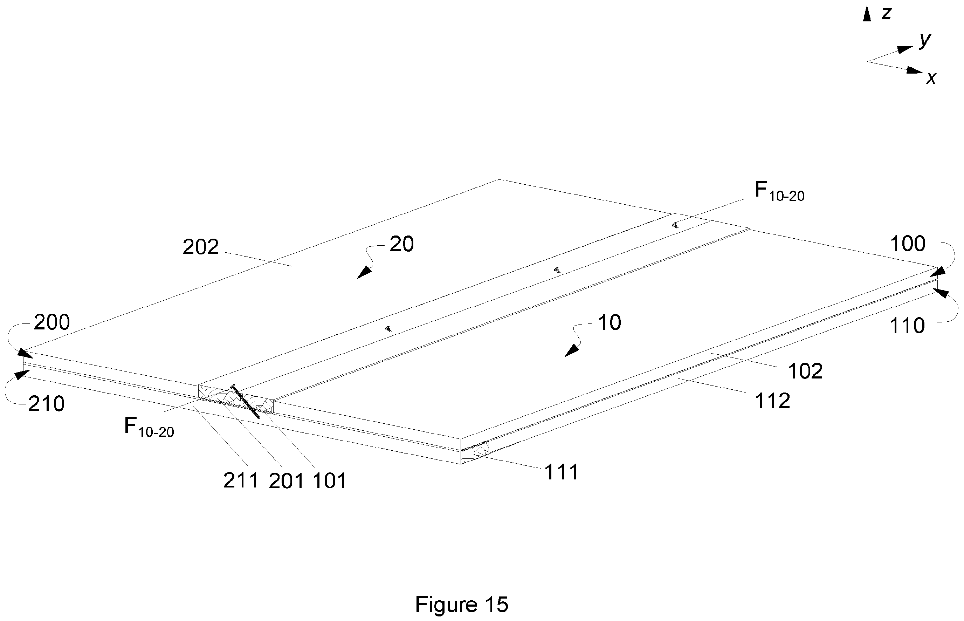

Les figures 3 et 4 représentent plus précisément une partie de deux des éléments constitutifs du système constructif 1, à savoir les éléments 10 et 20. Ces deux éléments constitutifs sont destinés à être fixés l'un avec l'autre, comme on le détaillera ci-après en référence aux figures 15 à 18.

Comme on peut le voir sur les figures 3 et 4, la partie de l'élément constitutif 10 représentée sur ces figures comprend plusieurs plis superposés, et en particulier les plis 100 et 110. La partie du premier pli 100 comprend deux lames structurelles en bois 101 et 103. Une lame fonctionnelle 102 est intercalée entre ces deux lames. Cette lame fonctionnelle 102 est destinée à remplir une fonction spécifique, différente de celle des lames structurelles, autrement dit elle ne sert pas à soutenir l'élément constitutif et n'est pas constituée de bois massif (mais elle peut être constituée de certains types d'isolants en bois, tels que de la laine de bois, qui ne sont pas reconnus comme ayant des propriétés porteuses). Le choix de sa matière constitutive dépend de la fonction que l'on souhaite lui conférer. Cette fonction peut se rapporter à l'isolation thermique et/ou acoustique, à l'inertie thermique, à la résistance au feu ou encore à toute autre fonction considérée comme appropriée.

La partie du deuxième pli 110 comprend deux lames structurelles en bois 111 et 113, entre lesquelles est disposée une lame fonctionnelle 112. Les plis 100 et 110 sont adjacents et sont destinés à être en contact l'un avec l'autre, au niveau d'une interface de contact située entre leurs faces respectives en regard l'une de l'autre.

De même, la partie de l'élément constitutif 20 représentée sur les figures 3 et 4 comprend notamment deux plis 200 et 210. La partie du premier pli 200 comprend deux lames structurelles en bois 201 et 203, entre lesquelles est située une lame fonctionnelle 202. La partie du deuxième pli 210 comprend deux lames structurelles en bois 211 et 213, entre lesquelles est située une lame fonctionnelle 212.

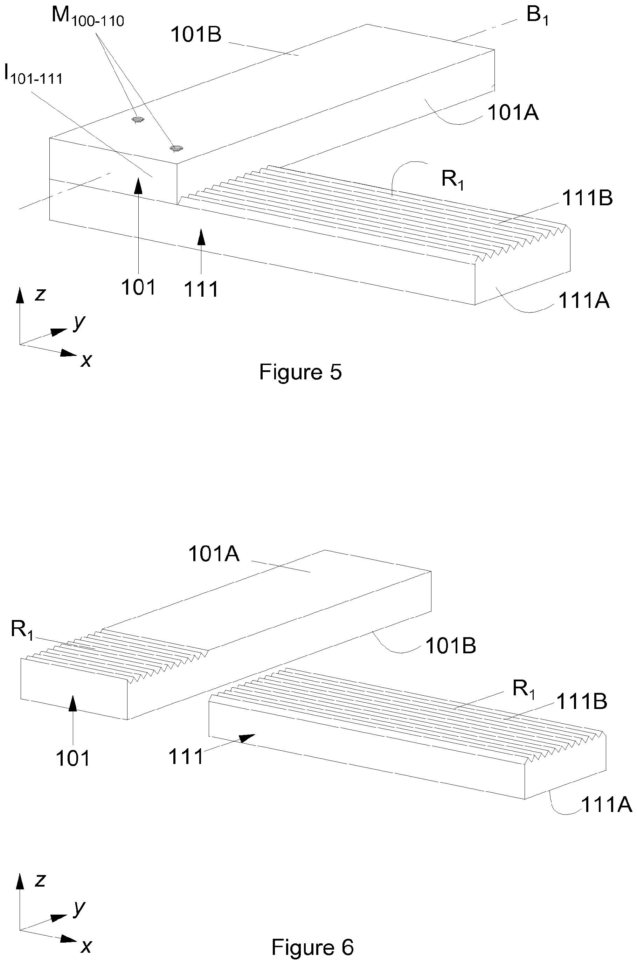

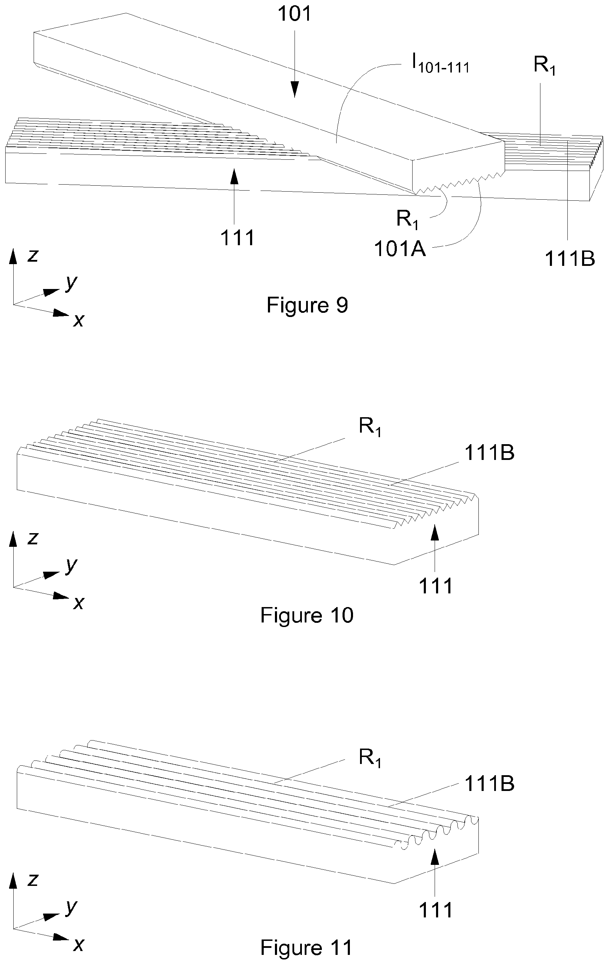

S'agissant de l'élément constitutif 10, les figures 5 à 9 représentent de façon plus précise le contact entre deux lames structurelles 101 et 111 de deux plis adjacents 100 et 110. Sur la figure 5, la lame structurelle 101 présente une face inférieure 101A (non visible) et une face supérieure 101B. De même, la lame structurelle 111 présente une face inférieure 111A (non visible) et une face supérieure 111B. Lorsque les plis 100 et 110 sont superposés, les lames structurelles 101 et 111 entrent en contact au niveau d'une interface de contact I₁₀₁₋₁₁₁ située dans le plan (Oxy). Sur la figure 6, on peut voir que la face inférieure 101A de la lame 101 est pourvue d'un ensemble de motifs rainurés Ri, sur toute son étendue longitudinale, c'est-à-dire suivant l'axe (Ox). La face supérieure 111B de la lame 111 est également pourvue d'un ensemble de motifs rainurés Ri, mais seulement sur une partie de son étendue transversale, également suivant l'axe (Ox). Sur les faces 101A et 111B, les motifs rainurés Ri sont identiques et forment une série de rainures parallèles entre elles. Dans cet exemple, les motifs présentent une section de forme triangulaire, bien que d'autres formes soient envisageables, comme on le verra en référence aux figures 10 à 14.

Ainsi, lorsque la lame structurelle 101 s'appuie contre la lame structurelle 111, les motifs rainurés R₂ de de la face 101A, orientés suivant l'axe (Ox) s'emboitent dans les motifs rainurés Ri de de la face 111B, également orientés suivant l'axe (Ox). Dès lors, les motifs rainurés Ri font obstacle au glissement des lames structurelles 101 et 111 l'une par rapport à l'autre suivant un premier axe de blocage B₁, parallèle à l'axe (Oy). Cet obstacle est obtenu sans qu'il ait été besoin de disposer de la colle au niveau de l'interface de contact I₁₀₁₋₁₁₁, et donc sans engendrer les inconvénients de la colle, notamment en termes écologique, mécanique et industriel. Par ailleurs, comme on l'a mentionné ci-dessus, ces motifs rainurés peuvent servir de repères pour l'emboitement des lames entre elles et donc pour l'agencement relatif des lames dans le cadre d'une fabrication automatisée.

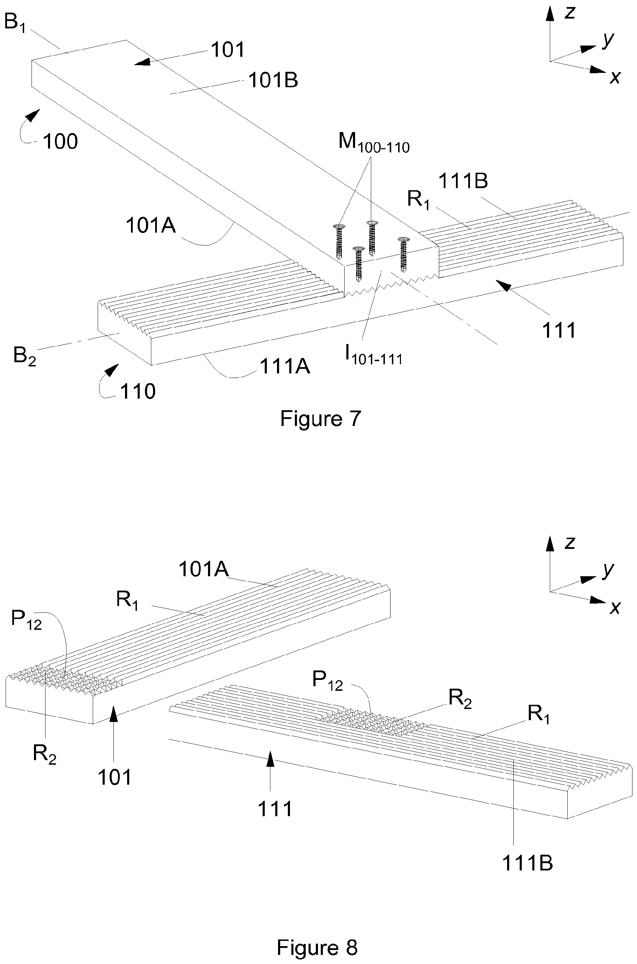

En référence à présent aux figures 7 et 8, les deux lames 101 et 111 peuvent être maintenues l'une contre l'autre par l'intermédiaire de moyens de maintien M₁₀₀₋₁₁₀. Selon l'invention, ces moyens de maintien M₁₀₀₋₁₁₀ présentent la particularité de ne pas être constitués de colle, toujours afin d'éviter - ou à tout le moins de limiter - la quantité de colle présente dans le système constructif 1. Sur ces figures, les moyens de maintien M₁₀₀₋₁₁₀ se présentent sous la forme de quatre organes d'assemblage de type tige, et plus particulièrement sous la forme d'un jeu de quatre vis traversant les deux lames 101 et 111 au niveau de l'interface de contact I₁₀₁₋₁₁₁.

Ces moyens de maintien M₁₀₀₋₁₁₀ assurent le maintien des lames 101 et 111 l'une contre l'autre suivant l'axe (Oz) normal au plan (Oxy) de l'interface de contact I₁₀₁₋₁₁₁. Ils permettent plus globalement de maintenir les plis 100 et 110 l'un contre l'autre, sans requérir la moindre quantité de colle. On comprendra que tout autre type d'organe d'assemblage peut être utilisé, par exemple une tige de type pointe annelée ou pointe torsadée. De même, un nombre différent d'organes peut être envisagé, par exemple deux ou cinq, et ces organes peuvent être disposés à d'autres endroits que sur l'interface de contact I₁₀₁₋₁₁₁. Néanmoins, on comprendra que le maintien est d'autant meilleur que les organes d'assemblage sont proches de l'interface de contact I₁₀₁₋₁₁₁.

Sur la figure 8, on peut voir plus précisément que la face 111B de la lame 111 est pourvue, d'une part, des motifs rainurés Ri, sous la forme de rainures parallèles disposées sur toute l'étendue longitudinale de la lame, suivant l'axe (Oy), et d'autre part de motifs rainurés supplémentaires R₂, sous la forme de rainures parallèles disposées seulement sur une partie de l'étendue transversale de la lame 111, suivant l'axe (Ox), c'est-à-dire orthogonales aux rainures Ri. Inversement, la face 101A de la lame 101 est pourvue, d'une part des motifs rainurés R₂, sous la forme de rainures parallèles disposées seulement sur une partie de l'étendue transversale de la lame 101, suivant l'axe (Oy), et d'autre part de motifs rainurés supplémentaires Ri, sous la forme de rainures parallèles disposées sur toute l'étendue longitudinale de la lame, suivant l'axe (Ox), c'est-à-dire orthogonales aux rainures R₂.

Dans cette configuration, au niveau de l'interface de contact I₁₀₁₋₁₁₁, les motifs rainurés R₁ et R₂ forment une matrice de picots permettant d'empêcher les lames 101 et 111 de glisser l'une par rapport à l'autre suivant deux axes de blocage B₁ et B₂ non parallèles et situés dans le plan (Oxy) de l'interface de contact I₁₀₁₋₁₁₁ : le premier axe de blocage B₁, orthogonal aux rainures Ri, donc dans l'axe (Ox), et le deuxième axe de blocage B₂, orthogonal aux rainures R₂, donc dans l'axe (Oy).

La configuration des figures 7 et 8 permet de faire obstacle au glissement des lames 101 et 111 dans l'ensemble du plan (Oxy) de l'interface de contact I₁₀₁₋₁₁₁. Les moyens de maintien M₁₀₀₋₁₁₀ permettent en outre le maintien des lames 101 et 111 l'une contre l'autre suivant l'axe (Oz) normal au plan (Oxy) de l'interface de contact I₁₀₁₋₁₁₁. Dès lors, les lames 101 et 111 sont assemblées et maintenues ensemble dans tout l'espace (Oxyz), sans nécessiter un quelconque dépôt de colle.

On comprendra que pour assurer un blocage des lames 101 et 111, il suffit que les motifs rainurés Ri et/ou R₂ soient disposés sur au moins une partie de l'interface de contact I₁₀₁₋₁₁₁. Néanmoins, du point de vue mécanique, le blocage des lames sera d'autant meilleur que les faces sont pourvues de motifs rainurées Ri et/ou R₂ sur toute l'interface de contact I₁₀₁₋₁₁₁. En outre, du point de vue industriel, les motifs rainurés peuvent être réalisés par un usinage des faces 101A et 111B. Dans ce cas, l'usinage peut être réalisé plus facilement et rapidement sur toute la longueur des lames, plutôt que sur une partie seulement de celles-ci.

Dans les exemples ci-dessus, les lames 101 et 111 sont orthogonales entre elles et les axes de blocage B₁ et B₂ sont eux-mêmes orthogonaux. Dans un autre exemple, illustré par la figure 9, les lames 101 et 111 ne sont pas orthogonales mais inclinées l'une par rapport à l'autre d'un angle proche de 45°. Dans ce cas, les rainures R₁ et R₂ sont orientées suivant les deux axes des lames respectivement 111 et 101, et les axes de blocage B₁ et B₂ sont orthogonaux chacun à l'une des lames. L'invention couvre plus généralement toute inclinaison possible entre deux lames structurelles.

Afin de renforcer la liaison mécanique entre les motifs rainurés R₁ et/ou R₂ des deux lames 101 et 111, ces dernières sont constituées en bois de feuillus. Ce type de bois dispose d'une plus grande densité, ce qui rend les motifs rainurés - de petites dimensions et donc potentiellement fragiles - plus solides et moins aptes à se briser sous l'effet d'une forte contrainte mécanique. En outre, la résistance de l'assemblage ayant été améliorée, l'invention rend possible de recourir à du bois de feuillus avec des sections moindres et une qualité moindre, ce qui permet une économie lors de l'achat de la matière première.

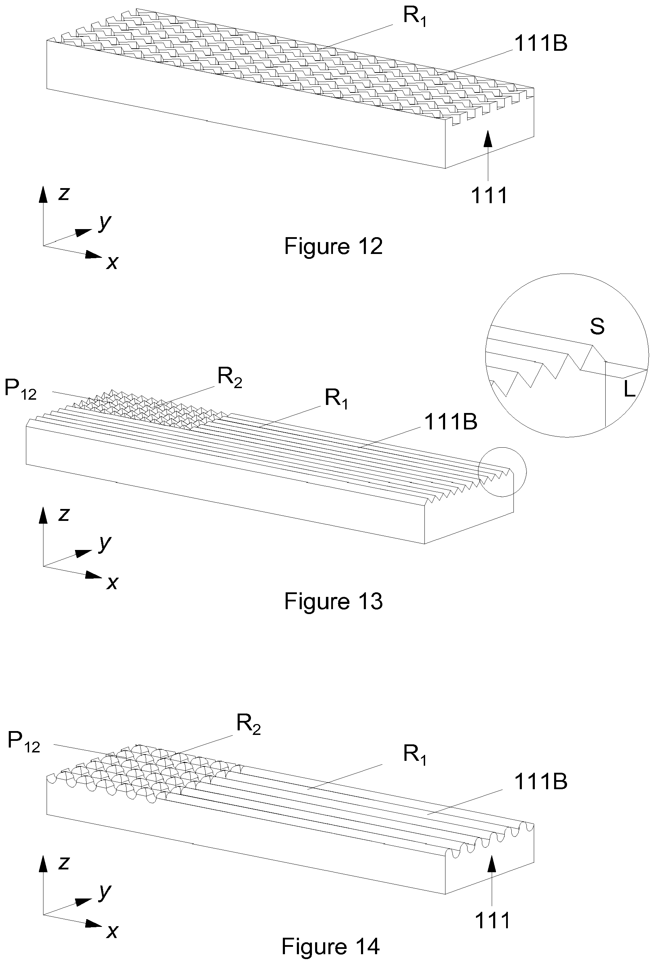

Les figures 10 à 14 illustrent différents exemples de motifs rainurés pouvant être envisagés selon l'invention. Sur les figures 10 à 12, il est montré un seul type de motifs rainurés, à savoir les rainures parallèles Ri suivant l'axe longitudinal de la lame 111. Sur la figure 10, les rainures Ri sont de section triangulaire, ce qui donne à la face 111B un motif global en dents de scie. Sur la figure 11, les rainures Ri présentent une section arrondie, ce qui confère à la face 111B un motif global en forme de vagues. Sur la figure 12, les rainures Ri présentent une section carrée, ce qui confère à la face 111B un motif global en forme de créneaux, mais les rainures présentent en outre une forme en zigzag sur leur étendue longitudinale. Selon les besoins, d'autres formes de motifs rainurés seraient également envisageables.

Sur les figures 13 et 14, à présent, on trouve deux types de rainures : les rainures parallèles Ri suivant l'axe longitudinal de la lame 111 et les rainures parallèles R₂ suivant l'axe transversal de cette même lame 111. Sur la figure 13, les rainures Ri sont disposées suivant l'axe (Ox) sur toute l'étendue longitudinale de la lame 111, et les rainures R₂ sont disposées suivant l'axe (Oy) sur une partie de l'étendue transversale de la lame 111, sans toutefois traverser entièrement la largeur de la lame. Sur la figure 14, les rainures Ri sont disposées de la même manière que sur la figure 14, mais les rainures R₂ sont disposées suivant l'axe (Oy) traversent entièrement la largeur de la lame.

Dans les deux cas, la face 111B comporte deux zones distinctes : une première zone constituée uniquement de rainures parallèles R₁ (pour un blocage suivant un axe) et une deuxième zone constituée de picots P₁₂ formés par le croisement des rainures R₁ et R₂ (pour un blocage suivant deux axes).

En termes de dimensions, les rainures R₁ et R₂ peuvent avoir une section à la base L (visible sur la figure 11) comprise entre 1 et 15 millimètres, de préférence entre 5 et 10 millimètres. L'angle au sommet S peut être compris entre 40° et 70°. Dans le cas des picots P₁₂ (formés par une matrice de rainures R₁ et R₂), ceux-ci peuvent également avoir une base de longueur et de largeur comprises entre 1 et 15 millimètres et un angle au sommet S compris entre 40° et 70°.

Les figures 15 à 18 illustrent différents exemples de fixation de deux éléments constitutifs conformément à la présente invention.

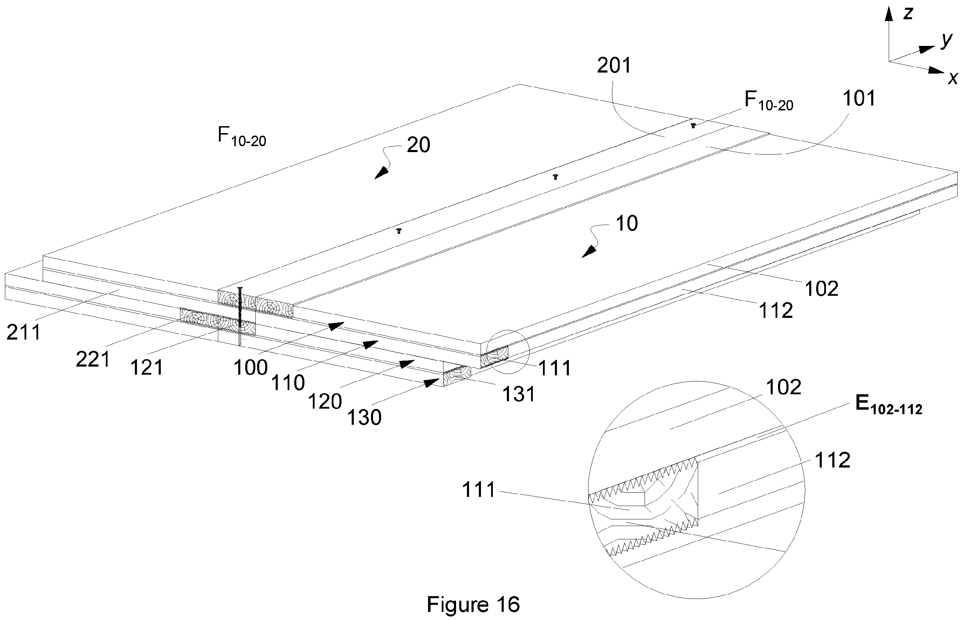

Les figures 15 et 16 représentent le cas de deux éléments constitutifs 10 et 20 parallèles, fixés au niveau de leurs parois latérales. Sur la figure 15, chaque élément constitutif est formé de deux plis comprenant chacun plusieurs lames structurelles. Dans un souci de simplicité, les plis 100, 110, 200 et 210 sont représentés avec une lame structurelle (respectivement 101, 111, 201 et 211) et une lame fonctionnelle (respectivement 102, 112 et 202, la dernière lame fonctionnelle n'étant pas visible). Les éléments 10 et 20 sont mis en contact au niveau de leurs parois latérales, et plus précisément au niveau de leurs lames structurelles 101 et 201, d'une part, et 111 et 211, d'autre part. Des moyens de fixation F₁₀₋₂₀ sous la forme d'une ligne d'organes d'assemblage de type tige. Ces organes sont disposés uniformément le long de l'interface entre les éléments 10 et 20, de façon inclinée, afin de pouvoir traverser à tout le moins le bois des lames 101, 201 et 111 (pour le premier organe) et le bois des lames 101 et 201 (pour les trois autres organes).

Dans une variante illustrée par la figure 16, les éléments constitutifs 10 et 20 comprennent chacun quatre plis superposés (par exemple, pour l'élément 10, les plis 100, 110, 120 et 130). Dans ce cas, un décalage peut être ménagé entre les plis 100 et 110, d'une part, et les plis 120 et 130, d'autre part (et de même pour l'élément 20). Dès lors, les organes de fixation F₁₀₋₂₀, toujours sous forme de tiges, peuvent traverser les plis successifs d'éléments constitutifs différents sans êtres inclinés. Sur la figure 14, les organes de fixation F₁₀₋₂₀ sont orientés suivant l'axe (Oz) et traversent à tout le moins, s'agissant du premier organe, successivement les lames 201, 211 et 121 (voire la lame 131, selon la longueur de l'organe de fixation). Les lames 201 et 211 appartenant à l'élément constitutif 20 et la lame 121 (et éventuellement la lame 130) appartenant à l'élément constitutif 10, ceux-ci sont bien fixés l'un avec l'autre par les organes de fixation F₁₀₋₂₀, une nouvelle fois sans requérir de colle et donc sans souffrir des inconvénients mentionnés ci-dessus lié à l'utilisation de colle.

Encore une fois, si des organes de type tiges tels que des vis conviennent pour fixer les éléments constitutifs les uns aux autres, il peut être envisagé tous types d'organes de fixation, par exemple de type pointe annelée ou pointe torsadée.

En outre, comme on peut le voir sur la figure 16, au niveau de la zone de contact entre les plis 100 et 110 de l'élément constitutif 10, les faces supérieure et inférieure de la lame structurelle 111 sont pourvues de motifs rainurés. Ces motifs engendrent une surépaisseur et donc un espace libre entre les lames fonctionnelles 102 et 112, ce qui améliore encore l'isolation de l'élément constitutif 10.

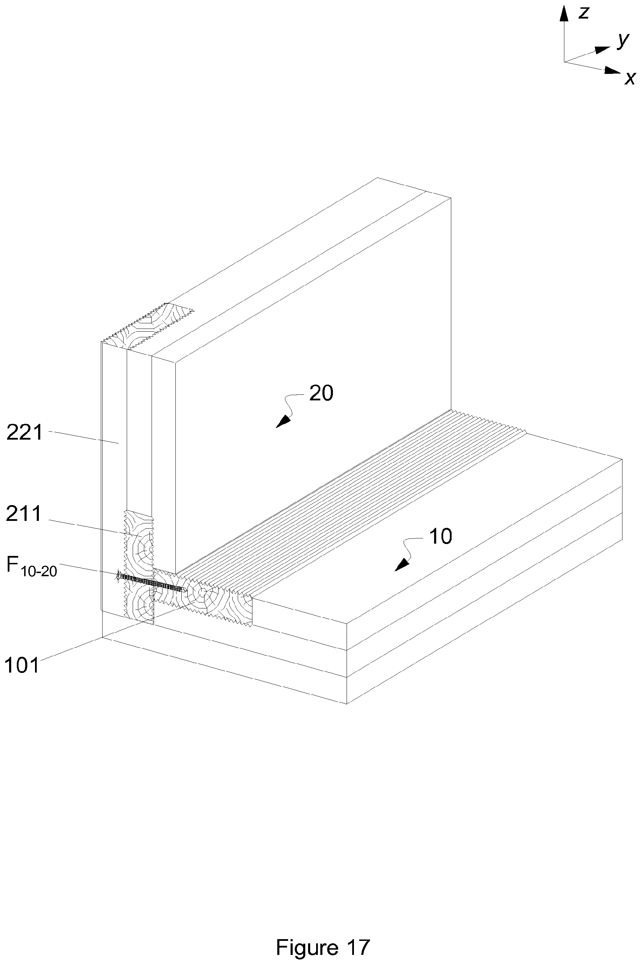

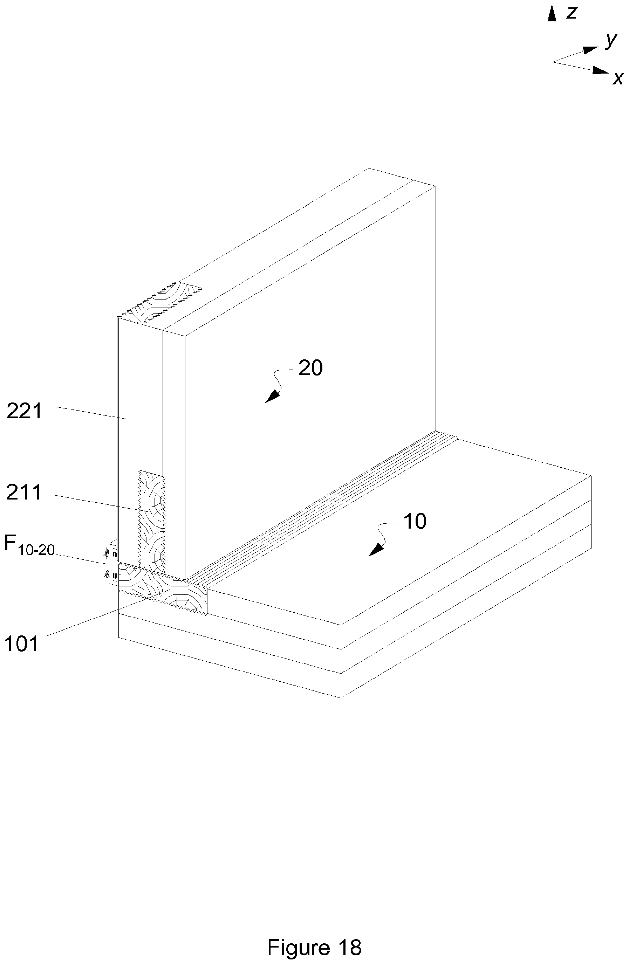

Les figures 17 et 18 représentent le cas de deux éléments constitutifs 10 et 20 orthogonaux, fixés au niveau de leurs parois latérales. Dans le cas de la figure 17, des organes de fixation de type tige F₁₀₋₂₀ traversent les lames structurelles 101 (de l'élément 10) et 211 (de l'élément 20), ce qui permet de fixer les éléments constitutifs 10 et 20 ensemble. Alternativement, dans le cas de la figure 18, les organes de fixation sont remplacés par des connecteurs F'₁₀₋₂₀. Ces connecteurs se présentent sous forme de plaques rejoignant chacune au moins une lame de l'élément 10 et de l'élément 20, auxquelles sont adjoints aux moins deux organes de types tiges, l'une traversant des lames de l'élément 10 et l'autre traversant des lames de l'élément 20.

Les connecteurs peuvent être envisagés en tant que variantes aux organes de fixation. Ils peuvent également être envisagés en alternance avec ces organes.

Dans les configurations illustrées par les figures 15 à 18, les lames structurelles peuvent être usinées sur toutes leurs faces avec des motifs rainurés, de manière que les lames structurelles de l'élément 10 entrent en contact avec les lames structurelles de l'élément 20 et que le glissement de ces lames structurelles l'une par rapport à l'autre - et donc le glissement des éléments 10 et 20 l'un par rapport à l'autre - soit limité.

Un système constructif 1 conforme à la présente invention peut être fabriqué, de préférence de façon automatisée, à partir de lames structurelles préparées à l'avance (soit en découpant une large planche aux dimensions souhaitées, soit en assemblant différents morceaux éparses de bois). Dans une première étape, les faces 101A et 111B des lames structurelles 101 et 111 sont usinées afin qu'elles soient pourvues des motifs rainurés Ri (et éventuellement R₂), au moins au niveau de leur interface de contact I₁₀₁₋₁₁₁. Dans une deuxième étape, les lames structurelles 101 et 111, ainsi usinées, sont mises en contact l'une avec l'autre, au niveau de leur interface de contact I₁₀₁₋₁₁₁, en utilisant les motifs rainurés comme repères, de sorte que ceux-ci s'imbriquent les uns dans les autres. Alors les lames structurelles 101 et 111 peuvent être maintenues l'une contre l'autre par l'intermédiaire d'un moyen de maintien M₁₀₁₋₁₁₁ (tel que décrit en référence à la figure 7). Ces mêmes étapes sont répétées pour chacune des lames structurelles d'un même élément constitutif, jusqu'à la réalisation complète de cet élément. Enfin, dans une troisième étape, les éléments constitutifs 10 et 20 sont fixés l'un avec l'autre par l'intermédiaire des moyens de fixation F₁₀₋₂₀ ou F'₁₀₋₂₀, et ainsi de suite pour tous les éléments constitutifs.

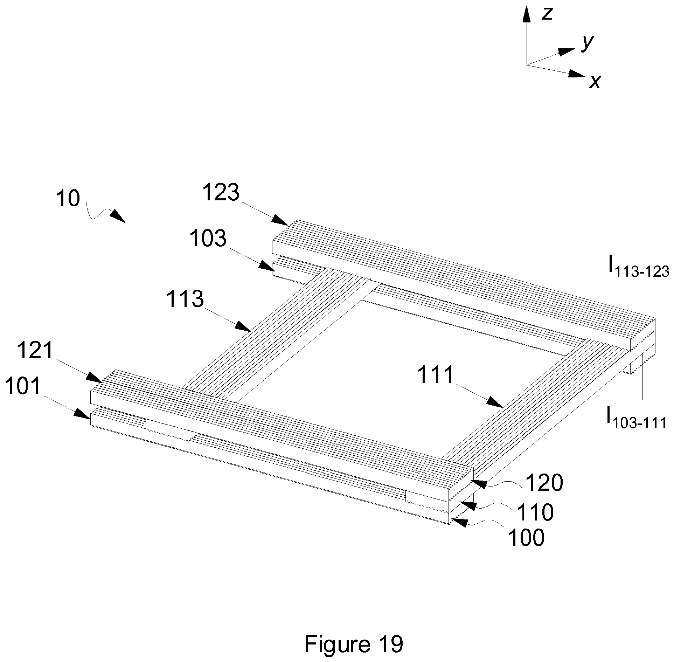

La figure 19 illustre un autre mode de réalisation d'un élément constructif selon la présente invention. Sur cette figure, l'élément constructif 10 est formé de trois plis 100, 110 et 120 de deux lames chacune, mais l'homme du métier saura adapter ce mode de réalisation à un nombre différent de plis et de lames. Le premier pli 100 comprend les lames ou traverses 101 et 103 suivant l'axe (Ox). Le deuxième pli 110 comprend les lames ou montants 111 et 113 suivant l'axe (Oy). Enfin, le troisième pli 120 comprend les lames ou traverses 121 et 123 suivant l'axe (Ox). Les lames d'un même pli sont parallèles entre elles et sont orthogonales aux lames d'un pli adjacent, mais l'homme du métier saura adapter ce mode d'orientation à une autre inclinaison non nulle des lames des deux plis adjacents.

Pour assembler ces plis et ces lames suivant l'invention, il est prévu d'usiner suivant leur longueur les faces des lames destinées à servir d'interface de contact, afin de les munir de séries de rainures parallèles (R₁ ou R₂). Pour chaque interface de contact, l'une des faces des lames en contact est en outre pourvue de deux séries de rainures parallèles et orthogonales l'une par rapport à l'autre (R₁ et R₂) afin de former une matrice de picots P₁₂ à cet endroit. Ainsi, dans le plan des interfaces de contact (Oxy), entre le premier pli 100 et le deuxième pli 110, les lames sont bloquées ensemble suivant l'axe B₂ (Ox), et entre le deuxième pli 110 et le troisième pli 120, les lames sont bloquées ensemble suivant l'axe B₁ (Oy).

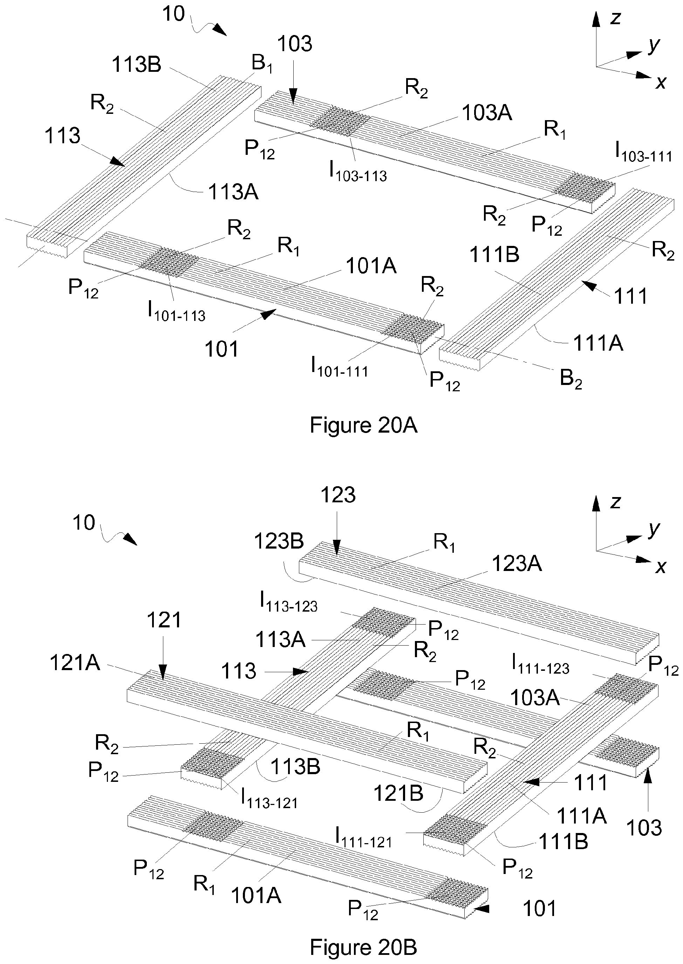

Dans les figures 20A et 20B, représentant des vues éclatées du mode de réalisation précédent, les lames du premier pli 101 et 103 sont pourvues sur leurs faces supérieures 101A et 103A de rainures parallèles Ri suivant l'axe (Ox), sur toute leur longueur, ainsi que de deux séries de rainures parallèles R₂ suivant l'axe (Oy), sur toute leur largeur. Les deux séries de rainures parallèles R₁ et R₂ forment des matrices de picots P₁₂. Les lames du deuxième pli 111 et 113 sont pourvues sur leurs faces inférieures 111B et 113B (visibles sur la figure 20A car les lames 111 et 113 y sont retournées) de rainures parallèles R₂ suivant l'axe (Oy). Lorsqu'on superpose les faces inférieures 111B et 113B sur les faces supérieures 101A et 103A, les rainures R₂ sur les faces inférieures 111B et 113B coopèrent avec les picots P₁₂ sur les faces supérieures 101A et 103A au niveau de leurs interfaces de contact I₁₀₁₋₁₁₁, I₁₀₁₋₁₁₃, I₁₀₃₋₁₁₁ et I₁₀₃₋₁₁₃ pour empêcher le glissement des plis 100 et 110 l'un par rapport à l'autre suivant l'axe B₂ (Ox) (les interfaces de contact étant situées au niveau des picots P₁₂).

Sur la figure 20B, on peut voir que ce sont les faces supérieures 111A et 113A des lames du deuxième pli 101 et 103 qui sont pourvues de rainures parallèles R₂ suivant l'axe (Oy) ainsi que deux ensembles de rainures parallèles Ri suivant l'axe (Ox) pour former deux ensembles de picots P₁₂. Les faces inférieures 121B et 123B des lames du troisième pli 121 et 123 sont pourvues de rainures parallèles Ri suivant l'axe (Ox). Ainsi, lorsqu'on superpose les faces inférieures 121B et 123B sur les faces supérieures 111A et 113A, les rainures Ri sur les faces inférieures 121B et 123B coopèrent avec les picots P₁₂ sur les faces supérieures 111A et 113A au niveau de leurs interfaces de contact I₁₁₁₋₁₂₁, I₁₁₁₋₁₂₃, I₁₁₃₋₁₂₁ et I₁₁₃₋₁₂₃ pour bloquer le glissement des plis 110 et 120 l'un par rapport à l'autre suivant l'axe B₁ (Oy). Ainsi, on empêche le glissement de l'élément constitutif dans le plan des interfaces de contact (Oxy), les interfaces entre les plis 100 et 110 empêchant le glissement suivant l'axe B₂ (Ox) et les interfaces entre les plis 110 et 120 empêchant le glissement suivant l'axe B₁ (Oy).

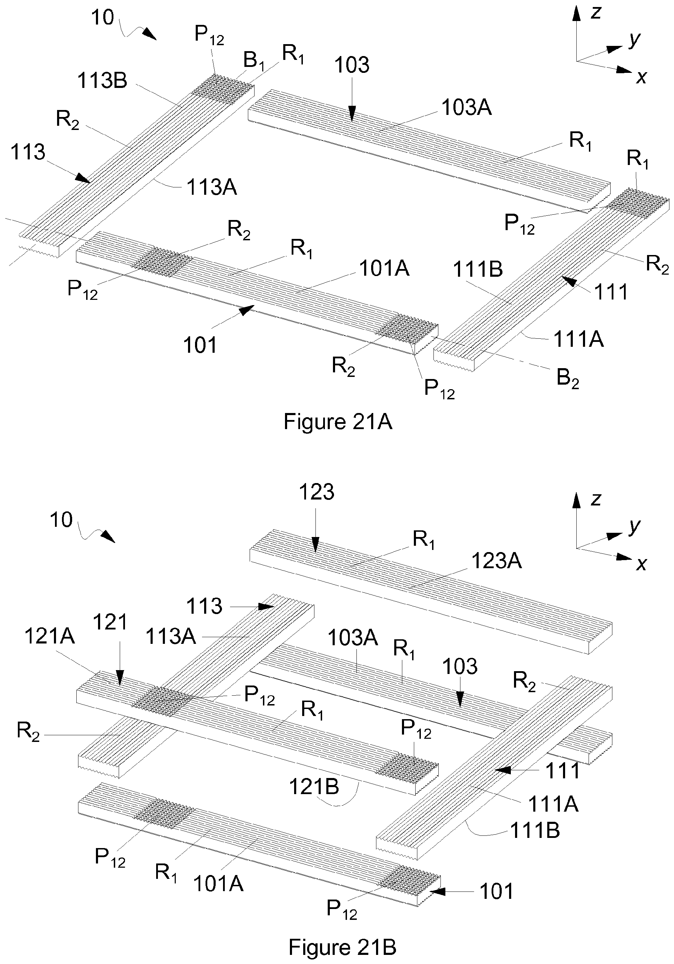

La variante des figures 21A et 21B est analogue à celle des figures 20A et 20B, à ceci près que les picots P₁₂ sont disposés ici de la façon suivante : deux ensembles de picots sur la face supérieure 101A de la lame 101, un ensemble de picots sur la face inférieure 111B de la lame 111, un ensemble de picots sur la face inférieure 113B de la lame 113, puis de nouveau deux ensembles de picots sur la face inférieure 121B de la lame 121 et sur la face inférieure 123B de la lame 123. Le glissement relatif des plis 100 et 110 est alors assuré dans tout le plan des interfaces (Oxy).

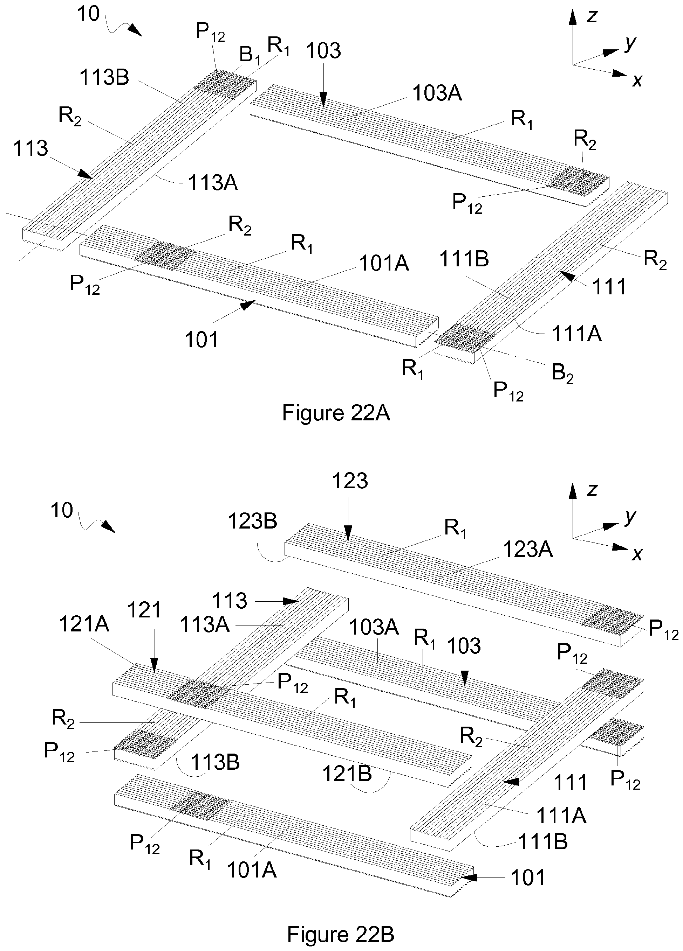

La variante des figures 22A et 22B est elle aussi analogue à celle des figures 20A et 20B, à ceci près que les picots P₁₂ sont disposés de la façon suivante : un ensemble de picots sur la face supérieure 101A de la lame 101 et sur la face supérieure 103A de la lame 103, un ensemble de picots sur la face inférieure 111B de la lame 111 et sur la face supérieure 111A de la lame 111, un ensemble de picots sur la face inférieure 113B de la lame 113 et sur la face supérieure 131A de la lame 113, un ensemble de picots sur la face inférieure 121B de la lame 121 et sur la face inférieure 123B de la lame 123. Le glissement relatif des plis 100 et 110, d'une part, et des plis 110 et 120, d'autre part, est alors assuré tout le plan (Oxy).

Dans chaque cas, on assure ainsi le blocage dans le plan des interfaces de contact (Oxy) par un jeu de rainures longitudinales et de picots disposés de façon appropriée sur les lames de l'élément constitutif. Ce mode de réalisation permet de réaliser de façon simple les deux axes de blocage, puisqu'il suffit d'usiner les faces des lames suivant leurs longueurs et/ou leurs largeurs pour former les rainures et/ou picots.

Bien entendu, la présente invention est définie par les revendications annexées et n'est pas limitée aux exemples et aux modes de réalisation décrits et représentés, mais elle est susceptible de nombreuses variantes accessibles à l'homme de l'art.

## Revendications

1. Système constructif (1), comprenant un plancher (2), des murs (3) et un rampant de toiture (4), chacun étant formé d'un ensemble d'éléments constitutifs (10, 20, ...) dont au moins un (10, 20) comprend au moins trois plis superposés (100, 110, ...) comprenant chacun au moins deux lames structurelles en bois (101, 103, ... ; 111, 113, ...), une face (101A) d'au moins une lame structurelle de l'un desdits plis (101) étant en contact avec une face (111B) d'au moins une lame structurelle d'un pli adjacent (111) au niveau d'une interface de contact (I₁₀₁₋₁₁₁), où:
- une lame fonctionnelle (102), par exemple destinée à l'isolation thermique et/ou phonique et/ou la résistance au feu, est intercalée entre deux lames structurelles (101, 103) d'un même pli (100);
- le plancher (2), les murs (3) et le rampant de toiture (4) sont divisés en plusieurs éléments constitutifs (10, 20, ...) suivant un découpage tenant essentiellement aux limites de dimensionnement des transports standards dans la construction et donc des outils industriels permettant de fabriquer les éléments constitutifs (10, 20, ...);
- au moins deux desdits éléments constitutifs (10, 20) sont fixés ensemble par l'intermédiaire de moyens de fixation non collants (F₁₀₋₂₀) ;
- au moins deux plis adjacents parmi lesdits plis superposés d'un même élément constitutif (100, 110) sont maintenus l'un contre l'autre par l'intermédiaire de moyens de maintien non collants (M₁₀₀₋₁₁₀) dont au moins certains comprennent des organes d'assemblage de type tige (M₁₀₀₋₁₁₀) ;
**caractérisé en ce que**
- lesdites faces en contact (101A, 111B) sont au moins partiellement pourvues, au niveau de ladite interface de contact (I₁₀₁₋₁₁₁), d'un ensemble de motifs rainurés (R₁) agencés de façon à faire obstacle au glissement desdites lames structurelles (101, 111) l'une par rapport à l'autre suivant au moins un premier axe de blocage (B₁) ;
- les motifs rainurés (R₁) comprennent une première série de rainures parallèles (R₁) et une deuxième série de rainures parallèles (R₂), orientées respectivement suivant un premier axe (Ox) et un deuxième axe (Oy) non parallèles ;
- les motifs rainurés (R₁, R₂) présentent une largeur à la base (L) comprise entre 1 et 15 millimètres ; et
- les motifs rainurés présentent des sections de forme sensiblement triangulaire.

2. Système constructif (1) selon la revendication 1, dans lequel au niveau d'au moins une interface de contact (I₁₀₁₋₁₁₁), la face d'une lame (111B) est munie d'une première série de rainures parallèles (R₁) orientées suivant un premier axe (Ox) et la face de l'autre lame (101A) est munie d'une première série de rainures parallèles (R₁) orientées suivant un premier axe (Ox) et d'une deuxième série de rainures parallèles (R₂) orientées suivant un deuxième axe (Oy) non parallèle à l'axe des rainures de la première série (Ox) de façon à faire obstacle au glissement desdites lames structurelles (101, 111) l'une par rapport à l'autre suivant ledit premier axe de blocage (B₁).

3. Système constructif (1) selon l'une des revendications 1 à 2, dans lequel les motifs rainurés (R₁, R₂) sont agencés de manière à faire également obstacle au glissement desdites lames structurelles (101, 111) l'une par rapport à l'autre suivant au moins un deuxième axe de blocage (B₂) non parallèle au premier axe de blocage (B₁).

4. Système constructif (1) selon la revendication 3, dans lequel les motifs rainurés (R₁, R₂) comprennent une première série de rainures parallèles (R₁) et une deuxième série de rainures parallèles (R₂), orientées respectivement suivant un premier axe (Ox) orthogonal au premier axe de blocage (B₁) et un deuxième axe (Oy) orthogonal au deuxième axe de blocage (B₂).

5. Système constructif (1) selon l'une des revendications 1 à 4, dans lequel :
- au niveau d'au moins une interface de contact (I₁₀₁₋₁₁₁), la face d'une lame (111B) est munie d'une première série de rainures parallèles (R₁) orientées suivant un premier axe (Ox) et la face de l'autre lame (101A) est munie d'une première série de rainures parallèles (R₁) orientées suivant un premier axe (Ox) et d'une deuxième série de rainures parallèles (R₂) orientées suivant un deuxième axe (Oy) non parallèle à l'axe des rainures de la première série (Ox) de façon à faire obstacle au glissement desdites lames structurelles (101, 111) l'une par rapport à l'autre suivant ledit premier axe de blocage (B₁) ; et
- au niveau d'au moins une autre interface de contact (I₁₁₁₋₁₂₁), la face d'une lame (121B) est munie d'une deuxième série de rainures parallèles (R₂) orientées suivant un deuxième axe (Oy) et la face de l'autre lame (111A) est munie d'une première série de rainures parallèles (R₁) orientées suivant un premier axe (Ox) non parallèle à l'axe des rainures de la deuxième série (Oy) et d'une deuxième série de rainures parallèles (R₂) orientées suivant un deuxième axe (Oy) de façon à faire obstacle au glissement desdites lames structurelles (111, 121) l'une par rapport à l'autre suivant ledit deuxième axe de blocage (B₂).

6. Système constructif (1) selon l'une des revendications précédentes, dans lequel les motifs rainurés (R₁, R₂) présentent un angle au sommet (S) compris entre 40° et 70°.

7. Système constructif (1) selon l'une des revendications précédentes, dans lequel, au niveau d'au moins une partie de l'interface de contact (I₁₀₁₋₁₁₁), les motifs rainurés (R₁, R₂) s'imbriquent au moins partiellement les uns dans les autres.

8. Système constructif (1) selon l'une des revendications précédentes, dans lequel la face d'au moins une lame structurelle (111B) d'un pli adjacent (110), orientée vers ledit pli (100), est agencée au niveau de l'interface de contact (I_{102,111}) avec le motif rainuré (R₁), de façon à ménager un espace (E₁₀₂₋₁₁₂) entre les lames fonctionnelles (102, 112) de deux plis adjacents (100, 110).

9. Système constructif (1) selon l'une des revendications précédentes, dans lequel au moins certains moyens de fixation comprennent des organes d'assemblage de type tige (F₁₀₋₂₀) et/ou de type connecteur (F'₁₀₋₂₀).

10. Procédé de fabrication d'un système constructif (1) selon l'une des revendications précédentes, comprenant notamment les étapes suivantes :
- l'usinage des faces (101A, 111B) des lames structurelles (101, 103 ; 111, 113) destinées à être en contact, de façon à les pourvoir de motifs rainurés (R₁, R₂) au niveau de leur interface de contact (I₁₀₁₋₁₁₁) ;
- la mise en contact et le maintien l'une contre l'autre des lames structurelles (101, 103 ; 111, 113) destinées à être en contact, les unes à la suite des autres, de façon à former lesdits éléments constitutifs (10, 20, ...) ;
- l'intercalation d'une lame fonctionnelle (102), par exemple destinée à l'isolation thermique et/ou phonique et/ou la résistance au feu, entre deux lames structurelles (101, 103) d'un même pli (100) ; et
- la fixation desdits éléments constitutifs (10, 20, ...) les uns avec les autres afin de former le plancher (2), les murs (3) et le rampant de toiture (4), du système constructif (1), le plancher (2), les murs (3) et le rampant de toiture (4) étant divisés en plusieurs éléments constitutifs (10, 20, ...) suivant un découpage tenant essentiellement aux limites de dimensionnement des transports standards dans la construction et donc des outils industriels permettant de fabriquer les éléments constitutifs (10, 20, ...).

## Patentansprüche

1. Bausystem (1), umfassend einen Boden (2), Wände (3) und ein Satteldach (4), wobei jedes Bausystem aus einer Gruppe von Bauelementen (10, 20,...) besteht, wovon mindestens ein Bauelement (10, 20) wenigstens drei überlappenden Lagen (100, 110, ...) umfasst, die wenigstens zwei strukturelle Holzblätter (101, 103, ... ;111, 113,...) aufweist, wobei eine Seite (101A) von mindestens einem strukturellen Blatt einer der sogenannten Lagen (101) mit einer Seite (111B) von mindestens einem strukturellen Blatt einer anliegenden Lage (101) an einer Kontaktschnittstelle (I₁₀₁₋₁₁₁) in Kontakt steht, wobei:
- ein funktionelles Blatt (102), beispielweise zur Wärmedämmung und/oder Schalldämmung und/oder Feuerbeständigkeit, zwischen zwei strukturelle Blätter (101, 103) einer einzigen Lage (100) angeordnet ist;
- der Boden (2), die Wände (3) und das Satteldach (4) in mehreren Bauelementen (10, 20, ...) gemäß einer Aufteilung unterteilt sind, die sich grundsätzlich auf den Grenzwerten für die Dimensionierung von Standardtransporten im Bauwesen und damit industriellen Werkzeugen zur Herstellung der Bauteile(10, 20, ...) basiert;
- mindestens zwei dieser Bauelementen (10, 20) sind über nicht klebenden Befestigungsmittel (F₁₀₋₂₀) miteinander verbunden;
- mindestens zwei anliegende Lagen dieser überlappenden Lagen des einzigen Bauelement (100, 110) über nicht klebende Haltemittel (M₁₀₀₋₁₁₀) gegeneinander gehalten werden, von denen zumindest einige stabartige Verbindungselemente (M₁₀₀₋₁₁₀) aufweisen;
**dadurch gekennzeichnet, dass**
- diese in Kontakt stehenden Seiten (101A, 111B) an dieser Kontaktschnittstelle (I₁₀₁₋₁₁₁) mindestens teilweise mit einer Gruppe nutartigen Muster (R₁) versehen sind, diese nutartigen Muster angeordnet sind, um das Gleiten dieser strukturellen Blätter (101, 111) entlang mindestens einer Verriegelungsachse (B₁) zu verhindern;
- die nutartigen Muster (R₁) eine erste Reihe paralleler Nuten (R₁) und eine zweite Reihe paralleler Nuten (R₂) aufweisen, wobei diese Reihen entlang einer ersten Achse (Ox) und einer zweiten Achse (Ox) zueinander nicht parallel orientiert sind;
- die nutartigen Muster (R₁, R₂) einer Bodenweite (L) zwischen 1 und 15 mm aufweisen; und
- die nutartigen Muster im Wesentlichen dreieckige Querschnitte aufweisen.

2. Bausystem (1) nach Anspruch 1, wobei an mindestens einer Kontaktstelle (I₁₀₁₋₁₁₁), der Seite eines Blatts (111B) mit einer ersten Reihe paralleler Nuten (R₁), die entlang einer ersten Achse (Ox) orientiert sind, ausgestattet ist und der Seite des anderen Blatts (101A) mit einer ersten Reihe paralleler Nuten (R₁), die entlang einer ersten Achse (Ox) orientiert sind, und einer zweiten Reihe paralleler Nuten (R₂), die entlang einer zweiten Achse (Oy) orientiert sind, wobei diese zweite Achse zur Achse der Nuten der ersten Reihe nicht parallel ist, ausgestattet ist, um das Gleiten dieser strukturellen Blätter (101, 111) entlang dieser ersten Verriegelungsachse (B₁) zu verhindern.

3. Bausystem (1) nach einem der Ansprüche 1 bis 2, wobei die nutartigen Muster (R₁, R₂) auch angeordnet sind, um das Gleiten dieser strukturellen Blätter (101, 111) entlang mindestens einer zweiten Verriegelungsachse (B₂) zu verhindern, die zur ersten Verriegelungsachse (B₁) nicht parallel ist.

4. Bausystem (1) nach Anspruch 3, wobei die nutartigen Muster (Ri, R2) eine erste Reihe paralleler Nuten (R₁) und eine zweite Reihe paralleler Nuten (R₂) aufweisen, wobei diese Reihen entlang einer ersten Achse (Ox), die orthogonale zu der ersten Verriegelungsachse (B₁) ist, und einer zweiten Achse (Oy), die orthogonale zu der zweiten Verriegelungsachse (B₂) ist, orientiert sind.

5. Bausystem (1) nach einem der Ansprüche 1 bis 4, wobei:
- zumindest an einer Kontaktschnittstelle (I₁₀₁₋₁₁₁), der Seite eines Blatts (111B) mit einer ersten Reihe paralleler Nuten (R₁), die entlang einer ersten Achse (Ox) orientiert sind, ausgestattet ist und der Seite des anderen Blatts (101A) mit einer ersten Reihe paralleler Nuten (R₁), die entlang einer ersten Achse (Ox) orientiert sind, und einer zweiten Reihe paralleler Nuten (R₂), die entlang einer zweiten Achse (Oy) orientiert sind, wobei diese zweite Achse zur Achse der Nuten der ersten Reihe (Ox) nicht parallel ist, ausgestattet ist, um das Gleiten dieser strukturellen Blätter (101, 111) entlang dieser ersten Verriegelungsachse (B₁) zu verhindern; und zumindest an einer anderen Kontaktschnittstelle (1111-121), der Seite eines Blatts (121B) mit einer zweiten Reihe paralleler Nuten (R₂), die entlang einer zweiten Achse (Oy) orientiert sind, ausgestattet ist, und der Seite des anderen Blatts (111A) mit einer ersten Reihe paralleler Nuten (Ri), die entlang einer ersten Achse (Ox) orientiert sind, wobei dieser ersten Achse zur Achse der Nuten der zweiten Reihe (Oy) nicht parallel ist, und einer zweiten Reihe paralleler Nuten (R₂), die entlang einer zweiten Achse (Oy) orientiert sind, um das Gleiten dieser strukturellen Blätter (111,121) entlang dieser zweiten Verriegelungsachse (B₂) zu verhindern.

6. Bausystem (1) nach einem der vorstehenden Ansprüche, wobei die nutartigen Muster (R₁, R₂) einen Spitzenwinkel (S) zwischen 40° und 70° aufweisen.

7. Bausystem (1) nach einem der vorstehenden Ansprüche, wobei, zumindest an einem Teil der Kontaktschnittstelle (I₁₀₁₋₁₁₁), die nutartigen Muster (R₁, R₂) zumindest teilweise ineinandergreifen.

8. Bausystem (1) nach einem der vorstehenden Ansprüche, wobei der Seite zumindest eines Blatts (111B) einer anliegenden Lage (110), der zu dieser Lage (100) orientiert ist, an der Kontaktschnittstelle (I_{102,111}) mit dem nutartigen Muster (R₁) angeordnet ist, um ein Raum (E₁₀₂₋₁₁₂) zwischen den funktionellen Blättern (102, 112) der zwei anliegenden Lage (100, 110) auszugestalten.

9. Bausystem (1) nach einem der vorstehenden Ansprüche, wobei zumindest einige Befestigungsmittel stabartige Verbindungselemente (F₁₀₋₂₀) und/oder steckerartige Verbindungselemente (F'₁₀₋₂₀) umfassen.

10. Verfahren zur Herstellung eines Bausystem (1) nach einer der vorstehenden Ansprüche, umfassend die folgenden Schritte:
- Herstellen der Seiten (101A, 11 IB) der in Kontakt stehenden strukturellen Blätter (101, 103 ; 111, 113), um diese mit nutartigen Muster (R₁, R₂) an ihren Kontaktschnittstelle (I₁₀₁₋₁₁₁) zu versehen;
- Kontaktieren und Lagern der strukturellen Blätter (101,103 ; 111,113) gegeneinander, die geeignet sind, um in Kontakt zu stehen zur Bildung der genannten Bauelementen (10, 20, ...) ;
- Anordnen eines funktionellen Blatt (102), beispielweise zur Wärmedämmung und/oder Schalldämmung und/oder Feuerbeständigkeit, zwischen zwei strukturellen Blätter (101, 103) einer einzigen Lage (100);und
- Befestigen dieser Bauelementen (10, 20, ...) zur Bildung des Bodens (2), der Wände (3) und des Satteldachs (4) des Bausystems (1), wobei der Boden (2), die Wände (3) und das Satteldach (4) in mehreren Bauelementen (10, 20, ...) gemäß einer Aufteilung unterteilt sind, die sich grundsätzlich auf den Grenzwerten für die Dimensionierung von Standardtransporten im Bauwesen und damit industriellen Werkzeugen zur Herstellung der Bauteile (10, 20, ...) basiert.

## Claims

1. A building system (1) comprising a floor (2), walls (3), and a roof post (4), each consisting of a set of component parts (10, 20, ...), at least one (10, 20) of which comprises at least three superimposed layers (100, 110, ...) each comprising at least two structural wood slats (101, 103, ...; 111, 113, ...), a face (101A) of at least one structural slat of one of said layers (101) being in contact with a face (111B) of at least one structural slat of an adjacent layer (111) at a contact interface (I₁₀₁₋₁₁₁), wherein:
- a functional slat (102), for example intended for thermal and/or sound insulation and/or fire resistance, is interleaved between two structural slats (101, 103) of the same layer (100);
- the floor (2), the walls (3), and the roof post (4) are divided into several component parts (10, 20, ...) following a division essentially based on the sizing limits of the construction transport standards and thus of the industrial tools allowing the manufacturing of the component parts (10, 20, ...);
- at least two of said component parts (10, 20) are fastened together through non-adhesive fastening means (F₁₀₋₂₀);
- at least two adjacent layers of said superimposed layers of the same component part (100, 110) are held against each other through non-adhesive holding means (M₁₀₀₋₁₁₀), at least some of which comprise rod-type assembly members (M₁₀₀₋₁₁₀);
**characterized in that**
- said contacting faces (101A, 111B) are at least partially provided, at said contact interface (I₁₀₁₋₁₁₁), with a set of grooved patterns (R₁) arranged so as to prevent said structural slats (101, 111) from sliding relative to each other along at least a first locking axis (B₁);
- the grooved patterns (R₁) comprise a first series of parallel grooves (R₁) and a second series of parallel grooves (R₂), oriented along a first axis (Ox) and a second axis (Oy) not parallel to each other, respectively;
- the grooved patterns (R₁, R₂) have a width at the base (L) between 1 and 15 millimeters; and
- the grooved patterns have substantially triangular sections.

2. A building system (1) according to claim 1, wherein at at least one contact interface (I₁₀₁₋₁₁₁), the face (111B) of one slat is provided with a first series of parallel grooves (R₁) oriented along a first axis (Ox) and the face (101A) of the other slat is provided with a first series of parallel grooves (R₁) oriented along a first axis (Ox) and with a second series of parallel grooves (R₂) oriented along a second axis (Oy) not parallel to the axis (Ox) of the grooves of the first series so as to prevent said structural slats (101, 111) from sliding relative to each other along said first locking axis (B₁).

3. A building system (1) according to one of claims 1 to 2, wherein the grooved patterns (R₁, R₂) are also arranged so as to prevent said structural slats (101,111) from sliding relative to each other along at least a second locking axis (B₂) not parallel to the first locking axis (B₁).

4. A building system (1) according to claim 3, wherein the grooved patterns (R₁, R₂) comprise a first series of parallel grooves (R₁) and a second series of parallel grooves (R₂), oriented along a first axis (Ox) orthogonal to the first locking axis (B₁) and a second axis (Oy) orthogonal to the second locking axis (B₂), respectively.

5. A building system (1) according to one of claims 1 to 4, wherein:
at at least one contact interface (I₁₀₁₋₁₁₁), the face (111B) of one slat is provided with a first series of parallel grooves (R₁) oriented along a first axis (Ox) and the face (101A) of the other slat is provided with a first series of parallel grooves (R₁) oriented along a first axis (Ox) and with a second series of parallel grooves (R₂) oriented along a second axis (Oy) not parallel to the axis (Ox) of the grooves of the first series so as to prevent said structural slats (101, 111) from sliding relative to each other along said first locking axis (B₁); and at at least one other contact interface (I₁₁₁₋₁₂₁), the face (121B) of one slat is provided with a second series of parallel grooves (R₂) oriented along a second axis (Oy) and the face (111A) of the other slat is provided with a first series of parallel grooves (R₁) oriented along a first axis (Ox) not parallel to the axis (Oy) of the grooves of the second series and with a second series of parallel grooves (R₂) oriented along a second axis (Oy) so as to prevent said structural slats (111, 121) from sliding relative to each other along said second locking axis (B₂).

6. A building system (1) according to one of the preceding claims, wherein the grooved patterns (R₁, R₂) have an angle at the top (S) between 40° and 70°.

7. A building system (1) according to one of the preceding claims, wherein at at least one part of the contact interface (I₁₀₁₋₁₁₁), the grooved patterns (R₁, R₂) are at least partially interlocked with each other.

8. A building system (1) according to one of the preceding claims, wherein the face (111B) of at least one structural slat of an adjacent layer (110), oriented towards said layer (100), is arranged at the contact interface (I_{102,111}) with the grooved pattern (R₁), so as to provide a gap (E₁₀₂₋₁₁₂) between the functional slats (102, 112) of two adjacent layers (100, 110).

9. A building system (1) according to one of the preceding claims, wherein at least certain fastening means comprise rod-type (F₁₀₋₂₀) and/or connector-type (F'₁₀₋₂₀) assembly members.

10. A method of manufacturing a building system (1) according to one of the preceding claims, comprising in particular the following steps:
- machining the faces (101A, 111B) of the structural slats (101, 103; 111, 113) intended to be in contact, so as to provide grooved patterns (R₁, R₂) at the contact interface (I₁₀₁₋₁₁₁) thereof;
- contacting and holding one against the other the structural slats (101, 103; 111, 113) intended to be in contact, one after the other, so as to form said component parts (10, 20, ...);
- interleaving one functional slat (102), for example intended for thermal and/or sound insulation and/or fire resistance, between two structural slats (101, 103) of the same layer (100); and
- mutually fastening said component parts (10, 20, ...) in order to form the floor (2), the walls (3), and the roof post (4) of the building system (1), the floor (2), the walls (3) and the roof post (4) being divided into several component parts (10, 20, ...) following a division essentially based on the sizing limits of the construction transport standards and thus of the industrial tools allowing the manufacturing of the component parts (10, 20, ...).
